Europäisches Patentamt

European Patent Office

Office européen des brevets

(19)

(11) Numéro de publication: **0 262 038 B1**

## FASCICULE DE BREVET EUROPEEN

(45) Date de publication de fascicule du brevet:
**15.05.91**

(51) Int. Cl.5: **H04L 7/02**

(21) Numéro de dépôt: **87402092.8**

(22) Date de dépôt: **18.09.87**

(54) **Procédé et dispositif de synchronisation symbole et leur application à la démodulation symbole de messages numériques.**

(30) Priorité: **23.09.86 FR 8613286**

(43) Date de publication de la demande:
**30.03.88 Bulletin 88/13**

(45) Mention de la délivrance du brevet:
**15.05.91 Bulletin 91/20**

(84) Etats contractants désignés:
**DE GB IT**

(56) Documents cités:
**EP-A- 0 023 852**
**FR-A- 2 358 056**
**FR-A- 2 493 646**

**PATENT ABSTRACTS OF JAPAN, vol. 9, no. 110 (E-314)[1833], 15 mai 1985; & JP-A-60 135 (TOSHIBA K.K.) 05-01-1985**

(73) Titulaire: **THOMSON-CSF**
**51, Esplanade du Général de Gaulle**
**F-92800 Puteaux(FR)**

(72) Inventeur: **Laurent, Pierre André**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

## Description

L'invention se rapporte au domaine des communications numériques et plus particulièrement à la démodulation symbole de messages numériques.

Pour prendre les décisions relatives aux valeurs successives des symboles, un signal de synchronisation symbole est établi à partir du signal numérique démodulé, la synchronisation trame des messages numériques étant supposée faite par ailleurs.

Classiquement, pour les messages numériques comportant une alternance de deux niveaux opposés caractéristiques d'une suite de symboles binaires ( + 1 et - 1), on utilise les passages à zéro du signal pour déterminer le signal de synchronisation symbole, soit en ne détectant que les passages à zéro du signal dans un sens (montant par exemple) losque le signal ne présente pas de décalage de composante continue (offset), soit en détectant les passages à zéro dans les deux sens (montant et descendant) de façon à établir la position moyenne des transitions et donc les instants d'échantillonnage (en cas de décalage de composante continue). Cette méthode convient lorsque les passages à zéro du signal sont suffisamment nombreux et pour les messages à 2 états. Par contre, lorsque les passages à zéro sont peu fréquents, il y a un risque de ne pas déterminer exactement les transistions entre symboles. De plus cette méthode n'est pas applicable aux messages comportant des symboles choisis dans un alphabet de plusieurs symboles associés à plus de 2 niveaux. Dans ce dernier cas en effet les transitions inter-symboles ne coïncident plus forcément avec des passages à zéro du singal numérique.

Enfin s'il y a un décalage de niveau continu (par exemple à la sortie d'un discriminateur de fréquence), il n'est plus possible de positionner exactement les transitions, ce qui crée des erreurs lors de la prise de décision.

L'invention a pour objet un procédé, et le dispositif correspondant, de synchronisation symbole qui remédie aux inconvénients des systèmes connus et dont la fiabilité est indépendante du contenu de l'information, peu sensible aux variations de niveau continu, et qui se prête à de nombreux types de modulation.

Suivant l'invention, un procédé de synchronisation symbole, pour la démodulation symbole d'un signal numérique, est caractérisé en ce qu'il consiste :
- à échantillonner le signal pour former E suites d'échantillons espacés à la période symbole Ts, (Si1... Sij...SiN), i vairant de 0 à E - 1 et j variant de 1 à N, les échantillons de même rang j dans deux suites successives de rangs i et i + 1 étant décalés l'un par rapport à l'autre d'une fraction de période symbole Ts/E,
- à calculer pour chaque suite d'échantillons la valeur F(i) = F(Si1...Sij,...,SiN) d'une fonction F, F étant choisie au préalable, en fonction du type de modulation utilisé à l'émission, pour que la valeur nominale de la fonction varie en fonction de i et que ses variations soient assimilables à celles d'un modèle sinusoïdal proportionnel à $COS(i2\pi/E)$,
- et à identifier les valeurs F(i) aux valeurs correspondantes du modèle $A + B COS(( i - io ) 2\pi/E)$ pour déterminer io, io étant caractéristique du décalage de synchronisation à appliquer au signal de synchronisation du circuit de décision qui effectue la démodulation symbole.

L'invention a également pour objet un dispositif de synchronisation symbole pour la mise en oeuvre du procédé de synchronisation précisé ci-dessus, caractérisé en ce qu'il comporte un dispositif de prélèvement de E suites d'échantillons du signal à la période symbole Ts, les symboles de même rang étant décalés d'une suite à la siuvante d'une fraction de période symbole Ts/E, et un dispositif de traitement des échantillons établissant, à partir de chaque suite, la valeur F(i) de la fonction F prédéfin ie calculée à partir des valeurs des échantillons de la suite, i variant de 0 à E - 1, le nombre N des échantillons de chaque suite étant suffisant pour que les valuers F(i) ne dépendent que du type de modulation et des conditions de réception, un circuit de traitement des valeurs F(i) couplé au circuit de traitement des échantillons, pour déterminer à partir des E valeurs de la fonction F(i) le décalage de synchronisation à appliquer à un circuit de décision sur les valeurs des symboles, un circuit séquenceur gérant l'ensemble des circuits.

L'invention a également pour objet l'application du procédé à la démodulation symbole de messages numériques.

L'invention sera mieux comprise et d'autres caractéristiques apparaîtront à l'aide de la description qui suit, en référence aux figures annexées.

La figure 1 illustre les transitions de signal modulé possibles pour une modulation à 4 états ;

La figure 2 représente les signaux de commande d'échantillonnage décalés pour former les suites d'échantillons ;

La figure 3 illustre les variations d'une fonction F, d'une part dans les conditions nominales Fnom(i) et d'autre part calculées à partir des suites d'échantillons, F(i) calculée.

La figure 4 est le schéma synoptique d'un mode de réalisation du dispositif de synchronisation selon l'invention.

Si l'on dispose, pour rechercher le meilleur signal de synchronisation, d'une série de E peignes d'échantillonnage commandés chacun par un signal de référence à la période Ts des symboles, les signaux sur les différents peignes étant régulièrement décalés l'un par rapport au suivant de Ts/E pour répartir au moyen de ces différents peignes les instants d'échantillonnage sur la durée d'un symbole, l'invention a pour objet un traitement des échantillons de signal de modulation issus de ces différents peignes d'échantillonnage conduisant à la détermination du signal de synchronisation symbole réalisant l'échantillonnage optimal pour la prise de décision.

Pour cela, l'invention utilise le fait que l'on peut trouver, pour un type de modulation donné, par exemple une modulation binaire FSK ou encore une modulation à 4 états, une fonction de l'indice i des différents peignes, calculée à partir des suites d'échantillons disponibles en sortie des peignes 0, 1,...i,...E - 1, qui varie périodiquement à la période E, et dont la variation en fonction de i peut être assimilée à une sinusoïde de période E . Lorsque la synchronsiation est correcte, que l'amplitude à la sortie du démodulateur l'est également, et qu'il n'y a pas de décalage de composante continue, cette fonction F(i) coïncide avec une fonction nominale $F_{nom}(i)$ caractéristique de la modulation, identifiable à un modèle sinusoïdal.

Lorsque les conditions ne sont pas celles indiquées ci-dessus, et notamment lorsque la synchronisation n'est pas correcte, la fonction F(i) calculée à partir des suites réelles d'échantillons s'écarte de la fonction nominale correspondante $F_{nom}(i)$ et donc du modèle sinusoïdal associé, notamment en phase. La détermination de l'écart de phase permet de minimiser le décalage et de retrouver les conditions de synchronisation.

Le processus de synchronisation précisément décrit ci-après permet également d'adcapter l'amplitude du signal en sortie du démodulateur signal et même de déterminer le décalage de composante continue. Les fonctions susceptibles d'être calculées peuvent être, par exemple, la variance pour chaque suite d'échantillons fournis par les peignes, ou encore la somme des valeurs absolues des différences des échantillons d'une suite par rapport à leur moyenne, ou encore l'autorrélation corrigée, l'une ou l'autre de ces fonctions étant choisie selon les types de modulation symbole à l'émission, comme il sera précisé ci-après.

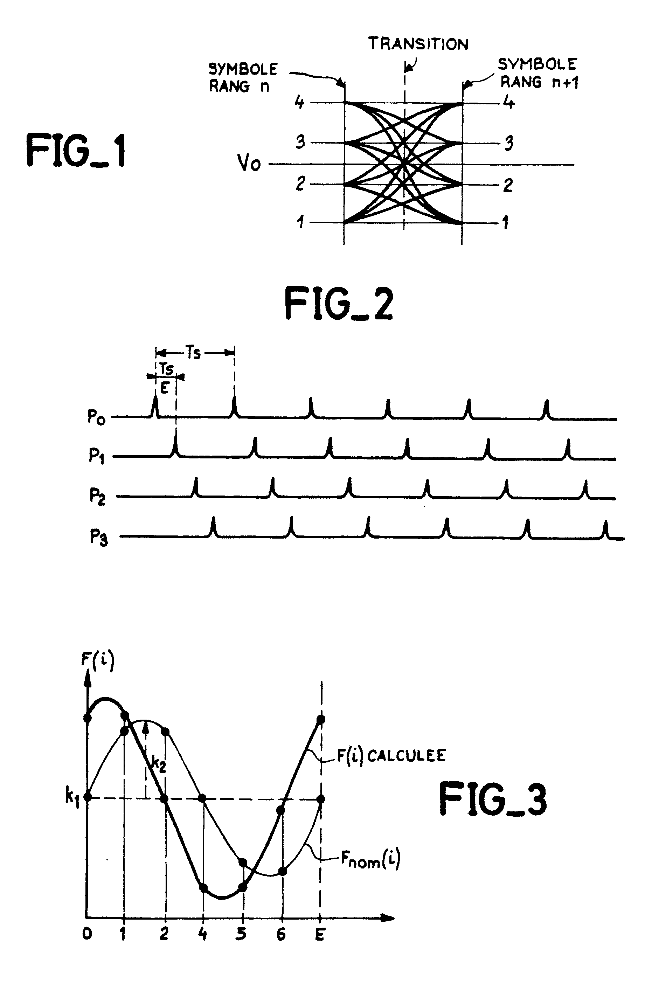

Sur la figure 1 on a représenté à titre d'exemple toutes les transitions possibles pour une modulat ion à 4 états, notés 1, 2, 3 et 4 ; le niveau moyen $V_0$, qui peut être égal à 0V, ne correspond aux transitions que pour certaines suites de symboles n, n + 1. Comme indiqué ci-dessus, la détection des passages à zéro ne peut permettre, seule, de déterminer la synchronisation.

La figure 2 représente, à titre d'exemple les instants d'échantillonnage en fonction du temps pour quatre peignes d'échantillonnage P0, P1, P2, P3 dont les signaux de référence sont décalés l'un par rapport au suivant de Ts/4 ; soit (S01, S02... S0j...S0N) la suite des échantillons issus du peigne P0, (Si1...Sij...SiN) la suite des échantillons issus du peigne i. Soit F la fonction choisie pour le type de modulation du signal reçu. La valeur de cette fonction, calculée à partir de la suite des échantillons issus du peigne d'indice i est F(i) = F-(Si1...Sij...SiN). Le nombre N d'échantillons prélevés est suffisant pour que la valeur de cette fonction ne dépende pas de l'information contenue dans le signal démodulé.

Comme indiqué ci-dessus F(i) calculée à partir des échantillons réels est périodique de période E : F(i) = F(i + E), et cette fonction est identifiable à un modèle sinusoïdal.

La figure 3 représente un exemple de la fonction F(i) qui montre la fonction nominale $F_{nom}(i)$ et la fonction calculée à partir de séquences d'échantillons disponibles sur les peignes d'échantillonnage, pour une séquence d'information.

La fonction réelle F(i) peut être assimilée à un modèle exprimé en fonction de la fonction nominale de la manière suivante :

$F(i) = A + B.F_{nom}(i - i_0)$, où A et B sont fonction des conditions de réception et où $i_0$ est carractéristique du décalage temporel. La détermination de $i_0$ permettra de choisir le peigne d'échantillonnage offrant la meilleure synchronisation par rapport au signal reçu démodulé, pour le traitement ultérieur de prise de décision.

A est fonction du décalage de composante continue et B correspond à la variation d'espacement des niveaux reçus.

Pour identifier la fonction réelle calculée à partir des échantillons détectés à son modèle, correspondant au modèle sinusoïdal asocié à la fonction nominale décalé en amplitude et en phase, les écarts entre F(i) et son modèle $A + B \cos((i - i_0) \cdot 2\pi/E)$ doivent être minimisés. A, B et $i_0$ seront donc les valeurs qui minimiseront suivant la méthode des moindres carrés par exemple, l'expression :

Somme $(F(i) - (A + B \cos((i - i_0) 2\pi/E))^2$ pour i variant de 0 à E - 1,

soit Somme $(F(i) - A - B_C \cos(i 2\pi/E) - B_S \sin(i 2\pi/E))^2$

avec $B_C = B.\cos i_0 2\pi/E$
$B_S = B.\sin i_0 2\pi/E$

Le calcul montre que la meilleure approximation conduit à :

A = Somme (F(i))/E

$B_C = (2/E)($Somme $F(i).\cos(i 2\pi/E))$

$B_S = (2/E)($Somme $F(i).\sin(i 2\pi/E))$

La valeur de $i_0$ peut alors être déterminée immédiatement à partir des valeurs de $B_C$ et $B_S$

L'instant optimal d'échantillonnage s'en déduit alors, cet instant étant déterminé par décalage fixe connu To (éventuellement nul) fonction de la modulation et de la fonction F utilisée, par rapport à la valeur de io ainsi déterminée.

Le procéde de synchronisation symbole décrit ci-dessus de manière générale, est illustré ci-après par quelques exemples.

Dans un premier exemple, la fonction F(i) utilisée pour traitement des échantillons issus des peignes d'échantillonnage est la fonction variance, qui caractérise la dispersion du signal par rapport à sa moyenne :

$$F(i) = (1/N).(Somme \; Sij)^2 - (1/N).(Somme \; Sij)^2,$$ pour j variant de 1 à N.

Pour un signal binaire modulé FSK variant entre - A et A, le maximum de $F(i)$ est $A^2$ et le minimum est $A^2/2$. cette fonction est assimilable à une sinusoïde et remplit bien les conditions énoncées, la différence entre les extrêmes étant suffisante pour off rir un bon contraste.

Pour un signal modulé à 4 états où les 4 niveaux équidistants asociés à ces états sont - A, - A/2, + A/3, + A, N étant assez grand pour que la répartition statistique des 4 niveaux dans la suite soit uniforme, le maximum de la fonction $F(i)$ est $5A^2/9$ tandis que son minimum est $A^2/3$. La différence entre ces deux extrêmes est $2A^2/9$. Cette fonction ne conduit qu'à un contraste assez faible, mais suffisant pour déterminer le décalage nécessaire.

Un autre exemple de fonction utilisable peut être la fonction somme des valeurs absolues des différences des échantillons par rapport à leur moyenne soit :

$$F(i) = Somme|Sij - (1/N) (Somme \; Sij)|,$$ pour j variant entre 1 et N.

Un troisième exemple peut être une fonction autocorrélation "corrigée", c'est-à-dire une fonction du type :

$$F(i) = Somme \; ((Sij - Sij')Sij),$$ pour j' = j - 1 et j variant entre 1 et N. Cette fonction donne de bons résultats pour un nombre important de types de modulation, même lorsque le signal présente un décalage de composante continue. La fonction utilisée pour la détermination de io doit en effet être adaptée aux différents types de modulation et de signaux reçus. En effet dans certains cas une fonctin choisie par exemple dans celles décrites ci-dessus peut, en fonction de i, être quasi constante pour des paquets d'échantillons, ce qui ne permettrait pas de déterminer un décalage. Il y a donc lieu d'optimiser pour que la fonction nominale présente une variation, que cette variation puisse êre assimilée à une sinusoïde, et que cette même fonction conduise également avec les paquets d'échantillons réels à des variations suffisantes.

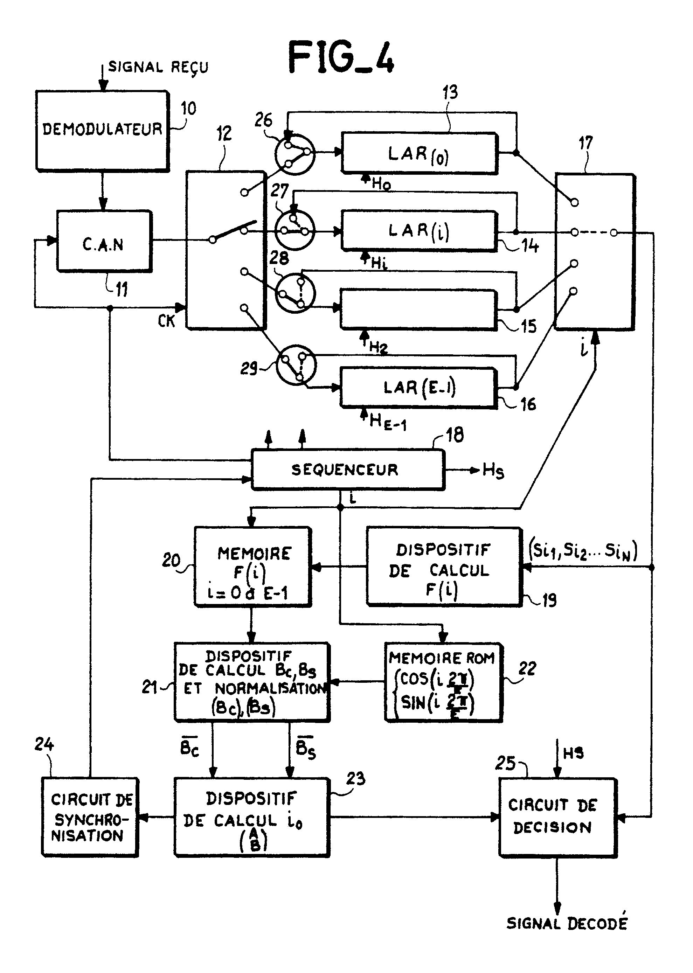

La figure 4 représente un schéma synoptique du dispositif de synchronisation symbole selon l'invention. Ce schéma met en évidence les différents sous-ensembles fonctinnels de traitement et permet donc de préciser l'invention.

En pratique le dispositif pourra être réalisé au moyen d'un microprocesseur adapté au traitement de signal, par exemple un circuit du type TMS 32010 ou TMS 32020 de la Société TEXAS INSTRUMENTS, avec la mémoire adaptée dans laquelle pourront être stockés les paramètres fixed nécessaires au traitement et les valeurs numériques associées aux paquets d'échantillons de signal prélevés dans le signal démodulé ; ces valeurs pourront être lues en mémoire lorsque nécessaire pour le traitement et effacées seulement après que la démodulation soit effectuée par le circuitude décision.

La figure 4 montre le démodulateur de signal 10, non détaillé, auquel est appliqué le signl reçu et qui fournit un signal analogique démodulé à un convertisseur analogique numérique 11, recevant un signal d'horloge CK à la période Ts/E, fourni par le circuit séquenceur 18. Ce convertisseur délivre sur sa sortie une suite de valeurs numériques caractéristiques des échantillons. Ces valeurs sont transmises cycliquement aux entrées de E lignes à retard à N étages, (E = 4 sur la figure) par l'intermédiaire d'un commutateur cyclique 12 également commandé par le signal d'horloge CK à la période Ts/E. Toutes les lignes à retard, 13, 14, 15, 16 sur la figure, reçoivent donc des échantillons espacés de Ts, la i$^{iéme}$ stockant des échantillons décalés de Ts/E par rapport à la précédente au moyen de signaux d'horloge de période Ts, décalés, $H_o...H_i...H_{E-1}$. Les paquets d'échantillons ainsi constitués correspondent aux signaux Si issus des "peignes" d'échantillonnage indiqués ci-dessus dans la description du procédé de synchronisation.

Pour la détermination du décalage de synchronisation, les échantillons sont traités cycliquement par paquets successifs issus chacun d'une ligne à retard, le paquet transféré pour traitement aux circuits de calcul étant sélectionné par un commutateur cyclique à E positions 17, commandé par le circuit séquenceur 18 qui sélectionne à chaque instant l'indice i de la ligne à retard dont les valeurs numériques doivent être extraites pour le traitement (Si1... Sij...SiN). Ces paquets de valeurs sont transmis à un dispositif de calcul 19 de la fonction F(i). Les valeurs calculées de cette fonction pour les E suites décalées sont, après leur calcul, mises en mémoire dans une mémoire 20. Un dispositif de calcul 21 lit en mémoire 20 les E valeurs de la fonction F(i) correspondant à un paquet d'information de N symboles pour calculer les valeurs $B_c$ et $B_s$. Les valeurs fixes $COS(i2\pi/E)$ et $SIN(i2\pi/E)$ sont en mémoire dans une mémoire morte 22, et sont lues pour le calcul, la mémoire 22, étant adressée par l'indice i. Les valeurs B $_c$ et B $_s$ sont ensuite normalisées, les valeurs normalisées (B$_C$) = B$_c$/Bet (B$_S$) = B$_S$/Boù

$$B = \sqrt{B_C^2 + B_S^2}$$

étant appliquées à un dispositif de calcul 23, typiquement une mémoire de table qui déduit io de B $_c$ et B $_s$. La valeur numérique de io alors déterminée est appliquée à un circuit de synchronisation 24 qui, à partir de la valeur io et de l'éventuel décalage fixe To lié au choix de la fonction F et au type de modulation, commande un éventuel décalage de synchronisation. La sortie de ce circuit est pour cela reliée au séquenceur 18 qui fournit l'horloge de synchronisation Hs identique à l'une ou l'autre des horloges à période symbole Hi appliquées aux lignes à retard.

Si la résolution est supérieure à Ts/E les valeurs utilisées pour la prise de décision peuvent résulter d'une interpolation entre les valeurs numériques associées aux deux lignes à retard commandées par les horloges Hi et Hi+1 dont les "tops" encadrent les tops de synchronisation déterminés à partir de io. Dans la solution représentée sur la figure 4, Hs est supposé être l'un des signaux H $_0$,...,H $_{E-1}$ et les valeurs appliquées au circuit de décision 25 sont celles issues de la ligne à retard d'indice i correctement synchronisée. Pour que les valeurs utiles, préalablement utilisées pour le calcul cyclique, ne soient pas perdues et puissent être transmises au circuit de décision, les lignes à retard sont bouclées, des commutateurs d'entrée, respectivement 26, 27, 28, 29 étant connectés entre les sorties du commutateur cyclique 12, les sorties des lignes à retard 13, 14, 15, 16 et les entrées de ces mêmes lignes à retard.

Le dispositif décrit ci-dessus effectue la synchronisation périodiquement, en traitant des paquets de valeurs. Il est également possible, notamment avec un micro-processeur adapté au traitement de signal de travailler en "continu", par exemple en utilisant deux jeux de mémoires travaillant suivant deux cycles en alternance, l'une pour la synchronisiation, l'autre pour la décision, ou encore en effectuant le calcul sur des paquets d'information glissants, décalés d'un ou de plusieurs symboles à chaque calcul.

Comme il a été indiqué ci-dessus, d'autres informations, utilisables par le circuit de décision, peuvent également être déduites du traitement, notamment les informations relatives au décalage de composante continue par A = (Somme F(i))/E, ou des informations relatives à la variation des niveaux par

$$B = \sqrt{B_C^2 + B_S^2}.$$

Le dispositif de calcul de io, 23, peut être prévu pour déterminer également A et B qui, appliquées au circuit de décision 25, commandent alors l'ajustement des seuils de décision du circuit 25. Le traitement apporte alors, en plus d'une bonne synchronisation symbole, une aide à la décision.

L'invention n'est pas limitée aux procédé et dispositif précisément décrits ci-dessus. En particulier, il n'a été question jusqu'ici que de signal modulé simple. Cette disposition n'est pas limitative et l'invention s'applique également à un signal modulé à deux composantes en quadrature. Si est alors un signal complexe à deux composantes et une fonction F peut être par exemple :
F(i) = Somme|(Sij -Sij')(Sij")|qui tient compte des échantillons des deux composantes en quadrature, Sij et Sij".

## Revendications

1. Procédé de synchronisation symbole, pour la démodulation symbole d'un signal numérique, caractérisé en ce qu'il consiste :
   - à échantillonner le signal pour former E suites d'échantillons espacés à la période symbole Ts, Si1, Sij...SiN, i variant de 0 à E - 1 et j variant de 1 à N, les échantillons de même rang j dans deux suites successives de rangs i et i + 1 étant décalés l'un par rapport à l'autre d'une fraction de période symbole Ts/E,
   - à calculer pour chaque suite d'échantillons la valeur F(i) = F(Si1...Sij...SiN) d'une fonction F, F étant choisie au préalable, en fonction du type de modulation utilisé à l'émission, pour que la valeur nominale de la fonction varie en fonction de i et que ses variations soient assimilables à celles d'un modèle sinusoïdal proportionnel à COS(i2π/E),
   - et à identifier les valeurs F(i) aux valeurs correspondantes du modèle A + B COS(( i - io ) 2π/E)pour déterminer io, io étant caractéristique du décalage de synchronisation à appliquer au signal de synchronisiation du circuit de décision qui effectue la démodulation symbole.

2. Procédé de synchronisation selon la revendication 1, caractérisé en ce que la fonction F est la variance de la suite d'échantillons, les valeurs F(i) étant données par :

$F(i) = (1/N).(\text{Somme } Sij^2) = (1/N).(\text{Somme } Sij)^{-2}$, pour j variant entre 1 et N.

3. Procédé selon la revendication 1, caractérisé en ce que la fonction F est une fonction d'autocorrélation, les valeurs F(i) étant données par : $F(i) = \text{Somme}|(Sij - Sij').Sij|$, où $j' = j - 1$, pour j variant entre 1 et N.

4. Procédé selon la revendication 1, caractérisé en ce que la fonction F est la fonction somme des valeurs absolues des différences des échantillons par rapport à leur moyenne, les valeurs F(i) étant données par : $\text{Somme}|Sij - (1/N)(\text{Somme } Sij)|$ pour j variant entre 1 et N.

5. Procédé selon l'une des revendications 1 à 4, caractérisé en ce que le traitement des valeurs F(i) consiste à calculer deux valeurs $B_c$ et $B_s$ telles que, pour i variant entre 0 et E - 1

$B_C = (2/E)(\text{Somme } F(i)COS(i2\pi/E))$
$B_S = (2/E)(\text{Somme } F(i)SIN(i2\pi/E))$,

io étant déterminé à partir de ces deux valeurs par la résolution du système :

$B_C = B.COS(io2\pi/E)$
$B_S = B.SIN(io2\pi/E)$.

6. Procédé selon la revendication 5, caractérisé en ce que la valeur

$$B = \sqrt{B_C{}^2 + B_S{}^2},$$

caractéristique de la variation des niveaux du fait des conditions de réception, est également calculée et utilisée dans le circuit pour adapter les seuils de décision aux conditions de réception.

7. Procédé selon la revendication 5, caractérisé en ce que la valeur A = Somme (F(i))/E, pour i variant de 0 à E - 1, caractéristique du décalage de composante continue, est également calculée et utilisée dans les circuits de réception.

8. Dispositif de synchronisation symbole pour la mise en oeuvre du procédé de synchronisation symbole selon l'une des revendications précédentes, caractérisé en ce qu'il comporte
   - un dispositif de prélèvement (11 à 17) de E suites d'échantillons d'un signal à la période symbole Ts, décalées l'une par rapport à la suivante d'une fraction de période symbole Ts/E, et un dispositif de traitement (19) de ces suites établissant à partir de chacune d'elles la valeur F(i) d'une fonction F prédéfinie calculée à partir des valeurs des échantillons de la suite, i variant de 0 à E - 1, le nombre N des échantillons de chaque suite étant suffisant pour que les valeurs F(i) ne dépendent que du type de modulation et des conditions de réception,
   - un circuit de traitement (21 à 24) des valeurs F(i) couplé au dispositif de traitement des suites (19), pour déterminer à partir des E valeurs de la fonction F(i) le décalage de synchronisation à appliquer à un circuit de décision (25) sur les valeurs des symboles,
   - et un circuit séquenceur (18) gérant l'ensemble des circuits.

9. Dispositif selon la revendication 8, caractérisé en ce que l'ensemble de ses circuits de traitement est intégré dans un microprocesseur adapté au traitement de signal.

10. Dispositif selon l'une des revendications 8 et 9, caractérisé en ce que le circuit de traitement (21 à 24) des valeurs F(i) peut également calculer, à partir de ces valeurs, la composante

$$B = \sqrt{B_S{}^2 + B_C{}^2}$$

caractéristique de la variation des niveaux, et la composante A = (Somme F(i))/E caractéristique du décalage de composante continue, ces deux composantes étant utilisées pour effectuer respectivement une correction des seuils de décision et une correction de composante continue s'il y a lieu.

11. Application du procédé selon la revendication 1 à la démodulation symbole de messages numériques.

**Claims**

1. A symbol synchronization method for the symbol demodulation of a digital signal, characterized in that it consists of:
   - sampling the signal in order to form E sequences of samples spaced with the symbol period Ts, Sil, Sij...SiN, with i varying from 0 to E - 1 and j varying from 1 to N, the samples of the same order j in two successive sequences of the orders i and i + 1 being offset in relation to each other by a fraction of the symbol period Ts/E,
- calculating for each sequence of samples the value F(i) = F(Si 1... Sij...SiN)of a function F, F being selected beforehand, as a function of the type of modulation employed for transmission in such a manner that the variations are similar to those of a sinusoidal model proportional to cos(12$\pi$/E),
- and identifying the values F(i) with the corresponding values of the model A + B Cos ((i - io ) 2$\pi$/E)in order to determine io, io being characteristic for the synchronization shift to be applied to the synchronization signal of the decision making circuit, which produces the symbol demodulation.

2. The synchronization method as claimed in claim 1, characterized in that the function F is the variance of the sequence of samples, the values F(i) being given by:
f(i) = (1/N).(sum $Sij^2$) - (1/N).(sum $Sij)^2$for j varying between 1 and N.

3. The method as claimed in claim 1, characterized in that the function F is an autocorrelation function, the values F(i) being given by: F(i) = sum|(Sij - Sij').Sij|,wherein j' = j + 1, for j varying between 1 and N.

4. The method as claimed in claim 1, characterized in that the function F is the sum function of the absolute values of the differences of the samples in relation to the mean thereof, the values F(i) being given by: sum |Sij + (1/N)-(sum Sij)|for j varying between 1 and N.

5. The method as claimed in any one of the preceding claims 1 through 4, characterized in that the treatment of the values (Fi) consists of calculating two values $B_C$ and $B_S$ such that for i varying between 0 and E - 1:

$B_C$ = (2/E)(sum F(i)cos(12$\pi$/E))
$B_S$ = (2/E)(sum F(i)sin(12$\pi$/E)),

io being determined on the basis of these two values by the resolution of the system:

$B_C$ = B.cos(io$\pi$/E)
$B_S$ = B.sin(io$\pi$/E)

6. The method as claimed in claim 5, characterized in that the value

$$B = \sqrt{B_C^2 + B_S^2},$$

characterizing the variation in the levels due to the conditions of reception, is also calculated and used in the circuit in order to adapt the decision thresholds to the conditions of reception.

7. The method as claimed in claim 5, characterized in that the value A = sum (F(i))/Efor i varying between 0 and E - 1 characterizing the shift of the continuous component, is also calculated and utilized in the reception circuits.

8. An apparatus for performing the method of symbol synchronization as claimed in any one of the preceding claims preceding claims, characterized in that it comprises:
- a sampling device (11 through 17) for E sequences of samples of a signal with a symbol period Ts, with a shift between each of them in relation to the preceding one by a fraction of the symbol period Ts/E, and a treatment device (19) for these sequences establishing on the basis of each of them the value F(i) of a predetermined function F calculated on the basis of the values of the samples of the sequence, i varying from 0 to E - 1, the number N of the samples of each sequence being sufficient in order to ensure that the values F(i) are only dependent on the type of modulation and on the conditions of reception,
- a treatment circuit (21 through 24) for the values F(i) coupled with the device for treatment of the sequences (19) in order to determine on the basis of E values of the function F(i) the synchronization shift to be applied to a decision making circuit (25) on the values of the symbols,
- and a sequencing circuit (18) organizing the totality of the circuits.

9. The apparatus as claimed in claim 8, characterized in that the totality its treatment circuits is integrated in a microprocessor adapted for the treatment of the signal.

10. The apparatus as claimed in claim 8 and claim 9, characterized in that the treatment circuit (21 through 24) of the values F(i) is also able to calculate, on the basis of these values, the component

$$B = \sqrt{B_C^2 + B_S^2},$$

characterizing the variation of the levels, and the component A = (sum F(i))/Echaracterizing the continuous component shift, said two components being utilized in order to perform respectively a correction of the decision threshold and a correction of the continuous component if appropriate.

11. An application of the method as claimed in claim 1 to the symbol demodulation of digital messages.

## Ansprüche

1. Verfahren zur Zeichensynchronisation für die Zeichendemodulation eines Digitalsignals, dadurch gekennzeichnet, daß es umfaßt:
   - die Abtastung des Signals, um E Folgen von Abtastimpulsen Si1, Sij...Si$\overline{N}$, mit i variierend zwischen 0 und E-1 und j variierend zwischen 1 und N, zu bilden, die durch die Zeichenperiode Ts getrennt sind, wobei die Abtastimpulse des gleichen Rangs j in zwei aufeinanderfolgenden Folgen mit den Rängen i und i+1 gegeneinander um einen Bruchteil der Zeichenperiode Ts/E verschoben sind,
   - die Berechnung des Wertes F(i) = F(Si1...Sij...SiN)einer Funktion F, wobei F im voraus gewählt wird, in Abhängigkeit vom bei der Aussendung verwendeten Modulationstyp für jede Folge von Abtastimpulsen, damit der Nennwert der Funktion in Abhängigkeit von i variiert und seine Veränderungen an diejenigen eines sinusförmigen Modells, das proportional zu COS(i$2\pi$/E)ist, angepaßt werden können,
   - und die Identifizierung der Werte F(i) mit den entsprechenden Werten des Modells A + B COS((i-io)$2\pi$/E), um io zu bestimmen, wobei io für die auf das Synchronisationssignal der die Zeichendemodulation ausführenden Entscheidungsschaltung anzuwendende Verschiebung der Synchronisation kennzeichnend ist.

2. Verfahren zur Synchronisation gemäß Anspruch 1, dadurch gekennzeichnet, daß die Funktion F die Varianz der Folge der Abtastimpulse ist, wobei die Werte F(i) gegeben sind durch: F(i) = (1/N$\cdot$(Summe Sij$^2$) - (1/N)$\cdot$(Summe Sij)$^2$, mit j variierend zwischen 1 und N.

3. Verfahren gemäß Anspruch 1, dadurch gekennzeichnet, daß die Funktion F eine Autokorrelationsfunktion ist, wobei die Werte F(i) gegeben sind durch: F(i) = Summe |(Sij- Sij')$\cdot$Sij|, wobei j'=j-1, mit j variierend zwischen 1 und N.

4. Verfahren gemäß Anspruch 1, dadurch gekennzeichnet, daß die Funktion F die Summenfunktion der Absolutwerte der Differenzen der Abtastwerte bezüglich ihres Mittelwerts ist, wobei die Werte F(i) gegeben sind durch: Summe |Sij- (1/N)(Summe Sij)|, mit j variierend zwischen 1 und N.

5. Verfahren gemäß einem der Ansprüche 1 bis 4, dadurch gekennzeichnet, daß die Bearbeitung der Werte F(i) die Berechnung zweier Werte BC und BS umfaßt, derart, daß für i variierend zwischen 0 und E-1

   BC = (2/E)(Summe F(i)$\cdot$COS(i$2\pi$/E))
   BS = (2/E)(Summe F(i)$\cdot$SIN(i$2\pi$/E)),

   gilt, wobei io anhand dieser zwei Werte durch die Lösung des Systems:

   BC = B$\cdot$COS(io$2\pi$/E)
   BS = B$\cdot$SIN(io$2\pi$/E)

   bestimmt wird.

6. Verfahren gemäß Anspruch 5, dadurch gekennzeichnet, daß der Wert

$$B = \sqrt{B_C^2 + B_S^2},$$

   der die Variation des Pegels aufgrund der Empfangsbedingungen kennzeichnet, ebenfalls berechnet und in der Schaltung verwendet wird, um die Entscheidungsschwellenwerte den Empfangsbedingungen anzupassen.

7. Verfahren gemäß Anspruch 5, dadurch gekennzeichnet, daß der Wert A = Summe (F(i))/E, mit i variierend zwischen 0 und E-1, der die Verschiebung der Nullkomponente kennzeichnet, ebenfalls berechnet und in den Empfangsschaltungen verwendet wird.

8. Vorrichtung zur Zeichensynchronisation für die Ausführung des Verfahrens zur Zeichensynchronisation gemäß einem der vorangehenden Ansprüche, dadurch gekennzeichnet, daß sie umfaßt
   - eine Abtastvorrichtung (11 bis 17) für E Folgen von Abtastimpulsen eines Signals mit der Zeichenperiode Ts, von denen einer in bezug auf den folgenden um einen Bruchteil der Zeichenperiode Ts/E verschoben ist, und eine Vorrichtung zur Bearbeitung (19) dieser Folgen, die anhand einer jeden von ihnen den Wert F(i) einer im voraus definierten Funktion F bildet, die anhand der Abtastwerte der Folge berechnet werden, mit i variierend zwischen 0 und E-1, wobei die Anzahl N der Abtastimpulse einer jeden Folge ausreicht, damit die Werte F(i) nur vom Modulationstyp und den Empfangsbedingungen abhängen,

- eine Bearbeitungsschaltung (21 bis 24) der Werte F(i), die mit der Folgen-Bearbeitungsvorrichtung (19) verbunden ist, um anhand der E Werte der Funktion F(i) die an eine Schaltung (25) für die Entscheidung über die Werte der Zeichen anzuwendende Verschiebung der Synchronisation zu bestimmen,

- und eine die Gesamtheit der Schaltungen steuernde Folgerschaltung (18).

9. Vorrichtung gemäß Anspruch 8, dadurch gekennzeichnet, daß die Gesamtheit dieser Bearbeitungsschaltungen in einem Mikroprozessor integriert ist, der für die Signalbearbeitung ausgelegt ist.

10. Vorrichtung gemäß einem der Ansprüche 8 und 9, dadurch gekennzeichnet, daß die Schaltung (21 bis 24) zur Verarbeitung der Werte F(i) anhand dieser Werte außerdem die Komponente

$$ B = \sqrt{B_S{}^2 + B_C{}^2}, $$

die die Variation des Pegels kennzeichnet, und die Komponente A = (Summe F(i))/E, die die Verschiebung der Nullkomponente kennzeichnet, berechnen kann, wobei diese zwei Komponenten gegebenenfalls für die Ausführung einer Korrektur der Entscheidungsschwellenwerte bzw. einer Korrektur der Nullkomponente verwendet werden.

11. Anwendung des Verfahrens gemäß Anspruch 1 auf die Zeichendemodulation von digitalen Nachrichten.

**FIG_1**

SYMBOLE
RANG n

TRANSITION

SYMBOLE
RANG n+1

Vo

**FIG_2**

Ts

$\dfrac{Ts}{E}$

$P_0$

$P_1$

$P_2$

$P_3$

$F(i)$

$F(i)$ CALCULEE

$k_2$

$k_1$

$F_{nom}(i)$

**FIG_3**

0    1    2    4    5    6    E

# FIG_4

SIGNAL REÇU

DEMODULATEUR 10

C.A.N 11

CK

12

26

27

28

29

LAR(0) 13

$H_0$

LAR(i) 14

$H_i$

15

$H_2$

LAR(E-1) 16

$H_{E-1}$

17

i

SEQUENCEUR 18 → $H_S$

i

MEMOIRE F(i) i=0 à E-1 20

DISPOSITIF DE CALCUL F(i) 19 $(S_{i_1}, S_{i_2} ... S_{i_N})$

DISPOSITIF DE CALCUL $B_C, B_S$ ET NORMALISATION $(B_C),(B_S)$ 21

MEMOIRE ROM $(COS(i \frac{2\pi}{E})$ $SIN(i \frac{2\pi}{E})$ 22

$\overline{B_C}$ $\overline{B_S}$

CIRCUIT DE SYNCHRO-NISATION 24

DISPOSITIF DE CALCUL $i_0$ $(\frac{A}{B})$ 23

HS

CIRCUIT DE DECISION 25

SIGNAL DECODÉ